# EUROPÄISCHE PATENTSCHRIFT

(11) **EP 0 763 175 B1**
(45) Veröffentlichungstag und Bekanntmachung des Hinweises auf die Patenterteilung: **08.09.1999**
(21) Anmeldenummer: 95919451.5
(22) Anmeldetag: 12.05.1995
(51) Int. Cl.: F16K 41/16

(54) **WELLENABDICHTUNG FÜR ARMATUREN**
SHAFT SEAL FOR VALVES
JOINT D'ETANCHEITE POUR TIGE DE ROBINETTERIE

(30) Priorität: 03.06.1994 DE 4419426
(43) Veröffentlichungstag der Anmeldung: 19.03.1997
(73) Patentinhaber: KSB Aktiengesellschaft, 67227 Frankenthal (DE)
(72) Erfinder: KRAFT, Gerd, D-76676 Graben-Neudorf (DE)
(86) Internationale Anmeldenummer: EP9501811
(87) Internationale Veröffentlichungsnummer: WO9533945

(56) Entgegenhaltungen:
- EP-A- 0 021 110
- DE-B- 2 730 492
- US-A- 3 586 289

## Beschreibung

Die Erfindung betrifft eine Wellenabdichtung für Armaturen, wobei eine Welle in einer Bohrung eines Armaturengehäuses dichtend gelagert ist, die Welle mit einem im Durchmesser größeren ersten Wellenbund versehen ist, das Gehäuse eine Ausnehmung für den ersten Wellenbund aufweist und zwischen Wellenbund und Ausnehmung ein Dichtungselement angeordnet ist.

Infolge eines gestiegenen Umweltbewußtseins wurden die gesetzlichen Anforderungen an die Sicherheiten von Anlagen stark erhöht. In diesem Zusammenhang ist auch ein Bundesimmissionsschutzgesetz erlassen worden, zu dem eine Verwaltungsvorschrift gehört, die technische Anleitung zur Reinhaltung der Luft, in Kurzform auch als TA-Luft bekannt. Aufgrund dieser Verwaltungsvorschrift werden an die Abdichtungen der Wellen von Armaturen sehr hohe Anforderungen gestellt. Diese Wellen, die bei Winkelbewegungen ausführenden Armaturen, auch als Schaltwellen bezeichnet werden, müssen besonders hochwertige fluiddichte Abdichtungen aufweisen. Desweiteren sind die Wellen so konstruiert, daß sie bei unzulässig hohen Drücken nicht aus dem Armaturengehäuse herausgedrückt werden können.

Durch die US-A-3 586 289 ist eine Wellenabdichtung bekannt, bei der die Gehäusedurchführung für eine Schaltwelle mit einem vorstehenden Bund versehen ist. Beiderseits des Bundes liegen Dichtungen an, die von einem Wellenbund der Welle und einem Handhebel angepreßt werden. Die Welle kann zwar nicht aus dem Gehäuse herausgedrückt werden, aber die Anpressung einer Dichtung durch einen Handhebel führt zu Undichtigkeiten.

Der Erfindung liegt daher das Problem zugrunde, eine wartungsfreie Armaturenabdichtung zu entwickeln, die den Anforderungen der Immissionsschutzauflagen entspricht, wobei gleichzeitig ein erheblich minimierter Herstellungsaufwand angestrebt wird.

Die Lösung dieses Problems erfolgt mit den Merkmalen des Anspruches 1. Der wesentliche Vorteil dieser Lösung besteht darin, daß die Welle mit einem vormontierten Dichtungs- und Lagerelement von innen nach außen montiert wird. Vom Gehäuseinnern aus wird die Welle in die zugehörige Bohrung des Armaturengehäuses eingeführt. Das L-förmige Dichtungselement umgibt dabei vollständig den ersten Wellenbund und übt somit eine Doppelfunktion als Dichtungs- und Lagerelement aus.

Im Bereich des Austritts aus dem Gehäuse ist die Welle in üblicher Weise gelagert, um auf die Welle einwirkende Querkräfte aufnehmen zu können, beispielsweise bei einem Schaltvorgang mit manueller Betätigung. Das L-förmige Dichtungselement wirkt nun als zusätzliches zweites Lagerelement. Großflächig wirkt es dabei mit seiner Umfangsfläche zur Aufnahme radialer Belastungen und gleichzeitig auch mit der axialen Stirnfläche zur Aufnahme von Axialkräften. Diese stabile Lagerung der Welle in ihren Endbereichen bietet sehr gute Voraussetzungen für die Einhaltung der Dichtfunktionen. Durch das zweite Bundelement, welches nach einer Ausgestaltung der Erfindung auch mit der Welle einstückig ausgebildet sein kann, wird das im Querschnitt L-förmige Dichtungselement in der Ausnehmung des Gehäuses gekammert. Dies ist vorteilhaft, da häufig verwendete Dichtungsmaterialien, wie beispielsweise PTFE und deren Compounds, zu einem veränderten Fließverhalten unter Druck-bzw. Temperatureinflüssen neigen. Durch die Kammerung des Dichtungselementes mittels des zweiten Bundelementes ergeben sich sehr gute Dichtungs- und Lagereigenschaften der Welle.

Je nach den Verwendung findenden Materialien für Gehäuse, Welle oder zweiten Bundelement, falls dieses als Einzelteil Verwendung findet, kann das zweite Bundelement mit sehr geringem Spiel zwischen seiner Umfangsfläche innerhalb der Ausnehmung geführt werden. Es würde damit eine Lagerfunktion zusätzlich übernehmen können.

Weitere Ausgestaltung der Erfindung, die in den Ansprüchen 4-8 beschrieben sind, verbessern die Dichtwirkung in erheblichem Maße. Die Anordnung eines Dichtungsringes in einer Nut des ersten Wellenbundes kann die Dichtwirkung zusätzlich verbessern. Die Nut kann hierbei sowohl an der Stirnseite des Wellenbundes als auch auf der Umfangsfläche des ersten Wellenbundes angeordnet sein. Durch die Verwendung eines elastischen Dichtungsringes kann zusätzlich die dichtende Anpreßwirkung auf das im Querschnitt L-förmige Dichtungselement verbessert werden.

Das im Querschnitt L-förmige Dichtungselement kann im Endbereich mit mindestens einer, zur Drehachse weisenden Lippe versehen sein. Diese kann eine mehrfache Funktion aufweisen. Bei Verwendung eines innerhalb einer Nut am Wellenbund angeordneten Dichtungsringes kann das Dichtungselement mit der Lippe haltend hinter den Dichtungsring greifen. Weiterhin ist damit ein Freiraum zwischen Nut und darin angeordnetem Dichtungsring ausfüllbar. Damit steht einem innerhalb der Nut angeordnetem Dichtungsring eine größere Anlagefläche am L-förmigen Dichtungselement zur Verfügung, wodurch auch ein Endbereich des L-förmigen Dichtungselementes unter dem Einfluß eines elastischen Dichtungsringes sicher dichtend gegen die zugehörige Gehäusewandfläche gepreßt wird. Durch das Ausfüllen der Toträume zwischen Nut und Dichtungsring mittels der Lippe wird auch das Fließverhalten des L-förmigen Dichtungselementes verringert. Die Lippe entspricht von ihrer Funktion her einem Vorsprung. Als Material für den Dichtring können bekannte elastische Dichtungsmaterialien Verwendung finden. Diese werden entsprechend dem jeweils abzusperrenden Fluid sowie der vorherrschenden Betriebsbedingungen ausgewählt. Die Form des Dichtungsringes kann sowohl O-Ringform oder andere bekannte Dichtungsformen aufweisen. Es ist auch möglich, Graphitringe oder Graphitelemente vorzusehen, um die geforderte Dichtheit in Abhängigkeit von den abzudichtenden Fluiden und Betriebsbedingungen zu gewährleisten. Falls es die baulichen Verhältnisse zulassen, kann ein zweiter Dichtungsring in einer Nut des zweiten Wellenbundes vorgesehen werden.

Zur Abdichtung der Welle gegenüber der Gehäusebohrung kann die Welle selbst mit ein oder mehreren Nuten zur Aufnahme von an sich bekannten Wellendichtringen versehen sein. Hierzu sieht eine weitere Ausgestaltung gemäß Anspruch 10 eine Montageverbesserung vor, wonach die Gehäusebohrung für die Aufnahme der Welle mit einer Montageschräge für die Wellendichtringe versehen ist. Von der Innenseite des Gehäuses her wird die Gehäusebohrung geringfügig konisch erweitert, um ein beschädigungsfreies Einführen der auf der Welle angeordneten Wellendichtringe in die Gehäusebohrung zu erreichen.

In den Ansprüchen 11 und 12 beschriebene Ausgestaltungen der Erfindung sehen die Verbindung des Wellenendes mit einem Absperrorgan der Armatur vor. Hierbei kann es sich um drehende Absperrorgane, wie beispielsweise Klappenteller oder Absperrkugeln handeln. Durch die Anordnung einer Sackbohrung in der Welle kann diese Wellenabdichtung auch bei Wellen von Armaturen mit steigenden Absperrorganen bzw. mit an den steigenden Absperrorganen angeordneten Armaturenspindeln Verwendung finden. Die steigende Spindel könnte dann innerhalb der Senkbohrung geführt sein.

Ausführungsbeispiele der Erfindung sind in den Zeichnungen dargestellt und werden im folgenden näher beschrieben. Es zeigen die
Fig. 1 eine Welle mit einem gekammerten Dichtungselement mit L-förmigem Querschnitt und die
Fig. 2 eine Ausgestaltung mit einem zusätzlichen Dichtungsring im Bereich des Dichtungselementes.

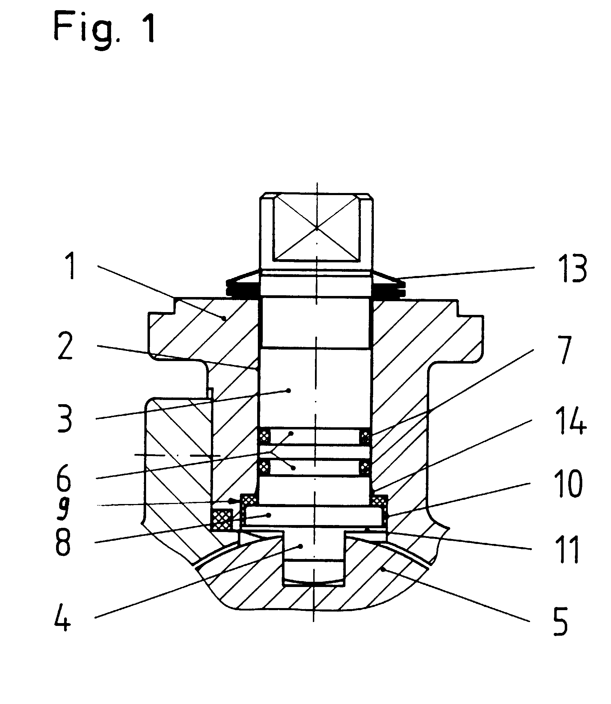

Die Fig. 1 zeigt einen Ausschnitt aus einem Armaturengehäuse, in dessen Gehäuse 1 eine Bohrung 2 zur Aufnahme einer Welle 3 angeordnet ist. Mit ihrem innerhalb des Gehäuses 1 befindlichen Ende 4 steht die Welle 3 mit einem Absperrorgan 5, hier einer Kugel, in Wirkverbindung. In Nuten 6 der Welle 3 sind Dichtungsringe 7 angeordnet, welche für eine Längsabdichtung der Welle 3 sorgen. Die Welle selbst verfügt über einen ersten Bund 8, der von einem im Querschnitt L-förmigen Dichtungselement 9 umgeben ist, welches innerhalb einer Ausnehmung 10 des Gehäuses 1 angebracht ist. Ein zweites Bundelement 11, das hier fester Bestandteil der Welle 3 ist, weist einen Außendurchmesser auf, welcher für eine Kammerung des Dichtungselementes 9 innerhalb der Ausnehmung 10 sorgt. Der Durchmesser des Bundelementes 11 ist hierbei so groß gewählt, daß es mit geringem Spiel innerhalb der Ausnehmung 10 geführt ist. Dieses Bundelement 11 kann daher gegebenenfalls auch eine Lagerfunktion übernehmen, wobei eine Lagerfunktion auch bei dem Dichtungselement 9, bedingt durch die Kammerung, auftritt. Entsprechend der Materialpaarung zwischen Welle 3 und Gehäuse 1 sowie der Anwendung findenden Toleranzen zwischen diesen Teilen können Querkräfte der Welle direkt vom Gehäuse aufgenommen werden. Es ist ohne weiteres möglich, im Bereich des Endes der Bohrung 2 ein zusätzliches Lagerelement 12 vorzusehen, um Querkräfte der Welle in optimaler Weise aufzunehmen und damit die Dichtelemente davon zu entlasten. Dieses Lager kann auch in die Welle 3 integriert werden. Darüber hinaus verbessert die Kammerung des im Querschnitt L-förmigen Dichtungselementes dessen Abdichtwirkung infolge einer verbesserten dichtenden Anpressung.

Federelemente 13, die sich am Gehäuse 1 abstützen und die Welle 3 mit ihrem ersten Bund 8 gegen das Dichtungselement 9 pressen, gewährleisten eine hohe Dichtheit auch bei denjenigen Betriebszuständen, bei denen innerhalb des Gehäuses 1 ein Vakuum vorherrschen kann. Damit wird der Bund 8 immer gegen das Dichtungselement 9 gepreßt und ein Abheben sowie daraus resultierende Undichtigkeiten werden vermieden.

Eine Montageschräge 14 am Eingangsbereich der Gehäusebohrung 2 verhindert bei dem Einbau der Welle 3 eine Beschädigung der Dichtungsringe 7. Diese Montageschräge ist so dimensioniert, daß damit die Kammerung des Dichtungselementes 9 nicht negativ beeinflußt wird. Sollte, in Abhängigkeit von dem Material des Dichtungselementes, durch Kaltfluß Material in die Montageschräge fließen, dann verbessert sich dadurch die anliegende dichtende Fläche.

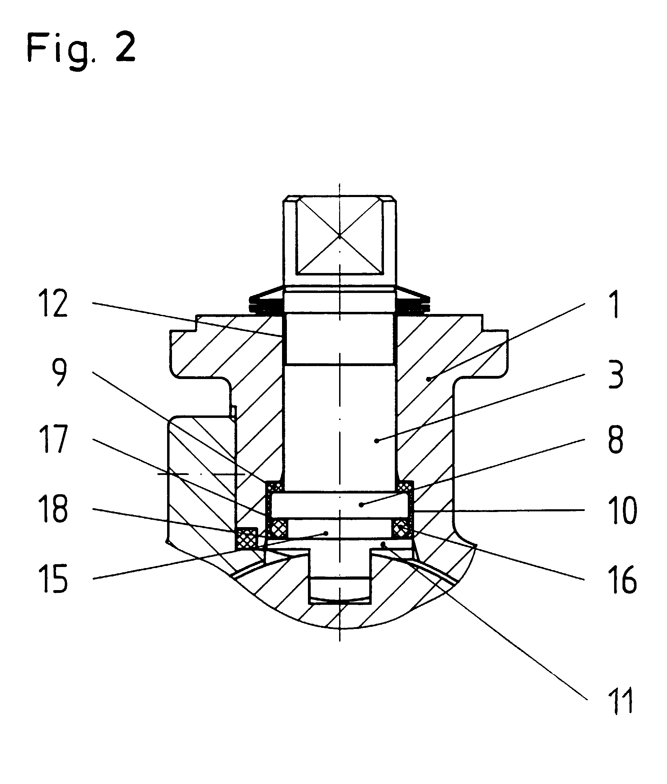

Eine Variante dieser Wellenabdichtung ist in der Fig. 2 gezeigt. Hierbei ist in der Umfangsfläche des ersten Wellenbundes 8 eine Nut 15 vorgesehen, in der sich ein elastischer Dichtungsring 16 befindet. Dieser Dichtungsring 16 könnte auch oder zusätzlich in einer Nut auf der zum Dichtungselement 9 weisenden axialen Stirnfläche des Wellenbundes 8 angeordnet sein. Am in Querschnitt L-förmigen Dichtungselement 9 weist dessen zylinderförmige Teil 17 an seinem freien Ende eine nach innen weisende Lippe 18 auf, mit der das Dichtungselement 9 bei der Montage hinter den Dichtungsring 16 greift. Das Dichtungselement 9 wird beim dargestellten Ausführungsbeispiel somit während der Montage sicher gehalten. Das zweite Bundelement 11 sorgt wiederum für eine zuverlässige Kammerung des Dichtungselementes 9 innerhalb der Ausnehmung 10 des Gehäuses 1. Bei diesem Ausführungsbeispiel wurde auf Dichtungsringe im Bereich der Welle 3 verzichtet. Dies ist jeweils abhängig von den abzusperrenden Medien, den Betriebsbedingungen und den geforderten Sicherheitsbestimmungen. Das Lager 12 ist in diesem Ausführungsbeispiel als Bestandteil der Schaltwelle 3 ausgebildet.

Mit dem Dichtungsring 16, der von dem Dichtungselement 9 umgeben ist, wird eine Verbesserung der Permanentdichtwirkung nach langer Betriebszeit erreicht. Denn sollte ein gewisser Materialverschleiß des gekammerten Dichtungselementes 9 auftreten, dann kann der Dichtungsring 16 ausgleichend wirken. Als Material für den Dichtungsring 16 ist neben den üblichen, den Anwendungsfällen entsprechenden Dichtungswerkstoffen, auch Graphit verwendbar. Aufgrund des Graphites wird der Temperatur-und Arbeitsbereich bzw. Einsatzbereich dieser Wellenabdichtung in Bereiche höherer Temperatur bzw. Drücke vergrößert.

## Patentansprüche

1. Wellenabdichtung für Armaturen, wobei eine Welle (3) in einer Bohrung (2) eines Armaturengehäuses dichtend gelagert ist, die Welle (3) mit einem in Durchmesser größeren ersten Wellenbund (8) versehen ist, das Gehäuse eine Ausnehmung (10) für den ersten Wellenbund (8) aufweist und zwischen Wellenbund (8) und Ausnehmung (10) ein Dichtungselement angeordnet ist, **dadurch gekennzeichnet**, daß ein im Querschnitt L-förmiges Dichtungselement (9) den ersten Wellenbund (8) umgibt, ein zweites Bundelement (11) ist, in Längsrichtung der Welle, zwischen Gehäuseinnern und erstem Wellenbund (8) angeordnet ist, wobei das zweite Bundelement (11) in die Ausnehmung (10) hineinragt und daß das zweite Bundelement (11) einen größeren Durchmesser als der erste Wellenbund (8) aufweist.

2. Wellenabdichtung nach Anspruch 1, dadurch gekennzeichnet, daß das zweite Bundelement (11) mit der Welle (3) einstückig ausgebildet ist.

3. Wellenabdichtung nach 1 oder 2, dadurch gekennzeichnet, daß das zweite Bundelement (11) mit geringem Spiel innerhalb der Ausnehmung (10) geführt ist.

4. Wellenabdichtung nach Anspruch 1, dadurch gekennzeichnet, daß im ersten Wellenbund (8) eine Nut (15) zur Aufnahme eines Dichtungsringes (16) angeordnet ist.

5. Wellenabdichtung nach Anspruch 4, dadurch gekennzeichnet, daß der Dichtungsring (16) aus elastischem Material besteht.

6. Wellenabdichtung nach Anspruch 4 oder 5, dadurch gekennzeichnet, daß der Dichtungsring (16) aus Graphit besteht.

7. Wellenabdichtung nach einem der Ansprüche 1 bis 6, dadurch gekennzeichnet, daß das im Querschnitt L-förmige Dichtungselement (9) im Endbereich mit mindestens einer zur Drehachse weisenden Lippe versehen ist.

8. Wellenabdichtung nach einem der Ansprüche 1 bis 7, dadurch gekennzeichnet, daß das zweite Bundelement (11) mit einer Nut zur Aufnahme eines Dichtungsringes versehen ist.

9. Wellenabdichtung nach einem der Ansprüche 1 bis 8, dadurch gekennzeichnet, daß die Welle (3) mit ein oder mehreren Nuten (6) zur Aufnahme von Wellendichtringen (7) versehen ist.

10. Wellenabdichtung nach Anspruch 8, dadurch gekennzeichnet, daß eine Bohrung (2) für die Aufnahme der Welle (3) mit einer Montageschräge (14) versehen ist.

11. Wellenabdichtung nach einem oder mehreren der Ansprüche 1 bis 10, dadurch gekennzeichnet, daß das innerhalb des Armaturengehäuses befindliche Wellenende mit einem Absperrorgan der Armatur oder einer steigenden Spindel eines Absperrorgans verbunden ist.

12. Wellenabdichtung nach einem oder mehreren der Ansprüche 1 bis 11, dadurch gekennzeichnet, daß Federelemente (13) den ersten Wellenbund (8) gegen das Dichtungselement (9) und das Gehäuse (1) pressen.

## Claims

1. Shaft seal for fittings, a shaft (3) being mounted in a sealing manner in a bore (2) of a fitting housing, the shaft (3) being provided with a first shaft collar (8) of larger diameter, the housing having a recess (10) for the first shaft collar (8), and a sealing element being arranged between shaft collar (8) and recess (10), characterized in that a sealing element (9) of L-shaped cross section surrounds the first shaft collar (8), a second collar element (11), in the longitudinal direction of the shaft, is arranged between housing interior and first shaft collar (8), the second collar element (11) projecting into the recess (10), and in that the second collar element (11) has a larger diameter than the first shaft collar (8).

2. Shaft seal according to Claim 1, characterized in that the second collar element (11) is formed in one piece with the shaft (3).

3. Shaft seal according to Claim 1 or 2, characterized in that the second collar element (11) is guided with slight clearance inside the recess (10).

4. Shaft seal according to Claim 1, characterized in that a groove (15) for accommodating a sealing ring (16) is arranged in the first shaft collar (8).

5. Shaft seal according to Claim 4, characterized in that the sealing ring (16) is made of elastic material.

6. Shaft seal according to Claim 4 or 5, characterized in that the sealing ring (16) is made of graphite.

7. Shaft seal according to one of Claims 1 to 6, characterized in that the sealing element (9) of L-shaped cross section is provided in the end region with at least one lip pointing towards the axis of rotation.

8. Shaft seal according to one of Claims 1 to 7, characterized in that the second collar element (11) is provided with a groove for accommodating a sealing ring.

9. Shaft seal according to one of Claims 1 to 8, characterized in that the shaft (3) is provided with one or more grooves (6) for accommodating shaft sealing rings (7).

10. Shaft seal according to Claim 8, characterized in that a bore (2) for accommodating the shaft (3) is provided with an installation bevel (14).

11. Shaft seal according to one or more of Claims 1 to 10, characterized in that the shaft end located inside the fitting housing is connected to a shut-off member of the fitting or a rising spindle of a shut-off member.

12. Shaft seal according to one or more of Claims 1 to 11, characterized in that spring elements (13) press the first shaft collar (8) against the sealing element (9) and the housing (1).

## Revendications

1. Joint d'étanchéité pour tige de robinetterie, dans lequel une tige (3) est montée hermétiquement dans un alésage (2) d'un corps de robinetterie, la tige (3) étant pourvue d'un premier collier de tige (8) de plus grand diamètre, le corps présentant un évidement (10) pour le premier collier de tige (8) et un élément d'étanchéité étant disposé entre le collier de tige (8) et l'évidement (10), **caractérisé en ce qu**'un élément d'étanchéité (9) de section transversale en forme de L entoure le premier collier de tige (8), en ce qu'un deuxième élément de collier (11) est disposé dans la direction longitudinale de la tige, entre l'intérieur du corps et le premier collier de tige (8), le deuxième élément de collier (11) faisant saillie dans l'évidement (10), et en ce que le deuxième élément de collier (11) présente un diamètre plus grand que le premier collier de tige (8).

2. Joint d'étanchéité pour tige selon la revendication 1, caractérisé en ce que le deuxième élément de collier (11) est formé d'une pièce avec la tige (3).

3. Joint d'étanchéité pour tige selon la revendication 1 ou 2, caractérisé en ce que le deuxième élément de collier (11) est guidé avec un faible jeu à l'intérieur de l'évidement (10).

4. Joint d'étanchéité pour tige selon la revendication 1, caractérisé en ce que dans le premier collier de tige (8) est disposée une rainure (15) pour recevoir une bague d'étanchéité (16).

5. Joint d'étanchéité selon la revendication 4, caractérisé en ce que la bague d'étanchéité (16) se compose de matériau élastique.

6. Joint d'étanchéité selon la revendication 4 ou 5, caractérisé en ce que la bague d'étanchéité (16) se compose de graphite.

7. Joint d'étanchéité selon l'une quelconque des revendications 1 à 6, caractérisé en ce que l'élément d'étanchéité (9) de section transversale en forme de L est pourvu dans la zone d'extrémité d'au moins une lèvre tournée vers l'axe de rotation.

8. Joint d'étanchéité selon l'une quelconque des revendications 1 à 7, caractérisé en ce que le deuxième élément de collier (11) est pourvu d'une rainure pour recevoir une bague d'étanchéité.

9. Joint d'étanchéité selon l'une quelconque des revendications 1 à 8, caractérisé en ce que la tige (3) est pourvue d'une ou plusieurs rainures (6) pour recevoir des bagues d'étanchéité (7) de tige.

10. Joint d'étanchéité selon la revendication 8, caractérisé en ce qu'un alésage (2) est pourvu d'un chanfrein de montage (14), pour recevoir la tige (3).

11. Joint d'étanchéité selon l'une ou plusieurs des revendications 1 à 10, caractérisé en ce que l'extrémité de la tige se trouvant à l'intérieur du corps de robinetterie est relié à un organe de blocage de la robinetterie ou une broche montante d'un organe de blocage.

12. Joint d'étanchéité selon l'une ou plusieurs des revendications 1 à 11, caractérisé en ce que des éléments de ressort (13) pressent le premier collier de tige (8) contre l'élément d'étanchéité (9) et le corps (1).
